(19) Europäisches Patentamt
European Patent Office
Office européen des brevets

(11) **EP 4 560 395 A1**

(12) **EUROPÄISCHE PATENTANMELDUNG**

(43) Veröffentlichungstag:
**28.05.2025 Patentblatt 2025/22**

(21) Anmeldenummer: **23211248.2**

(22) Anmeldetag: **21.11.2023**

(51) Internationale Patentklassifikation (IPC):
**G02F 1/355** (2006.01)

(52) Gemeinsame Patentklassifikation (CPC):
**G02F 1/3558**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(71) Anmelder: **Fraunhofer-Gesellschaft zur
Förderung
der angewandten Forschung e.V.
80686 München (DE)**

(72) Erfinder: **Simon, J
79110 Freiburg (DE)**

(74) Vertreter: **WSL Patentanwälte Partnerschaft mbB
Kaiser-Friedrich-Ring 98
65185 Wiesbaden (DE)**

(54) **VERFAHREN UND SYSTEM ZUM POLEN EINES FERROELEKTRISCHEN MEDIUMS**

(57) Die vorliegende Erfindung betrifft ein Verfahren zum Polen eines ferroelektrischen Mediums mit einer ersten Seitenfläche und einer der ersten Seitenfläche gegenüber angeordneten zweiten Seitenfläche, sodass das ferroelektrische Medium ein erstes Volumensegment und ein zweites Volumensegment aufweist, wobei die spontane Polarisierung des ferroelektrischen Mediums in dem ersten Volumensegment eine erste Orientierung und in dem zweiten Volumensegment eine zweite Orientierung aufweist und wobei die erste Orientierung und die zweite Orientierung voneinander verschieden sind. Das erste Volumensegment ist durch einen ersten Seitenflächenabschnitt der ersten Seitenfläche und einem zweiten Seitenflächenabschnitt der zweiten Seitenfläche definiert und das zweite Volumensegment ist durch einen dritten Seitenflächenabschnitt der ersten Seitenfläche und einen vierten Seitenflächenabschnitt der zweiten Seitenfläche definiert. Dabei weist das Verfahren die Schritte auf: Bereitstellen des ferroelektrischen Mediums; Aufbringen einer ersten Kontaktfläche eines ersten elektrischen Kontakts auf den ersten Seitenflächenabschnitt, wobei die erste Kontaktfläche kleiner ist als der erste Seitenflächenabschnitt; Aufbringen einer zweiten Kontaktfläche eines zweiten elektrischen Kontakts auf die zweite Seitenfläche, wobei die zweite Kontaktfläche zumindest den zweiten Seitenflächenabschnitt bedeckt; Anlegen einer elektrischen Spannung zwischen dem ersten elektrischen Kontakt und dem zweiten elektrischen Kontakt; Ausführen einer Relativbewegung zwischen der ersten Kontaktfläche und dem ferroelektrischen Medium in zwei zueinander senkrechten Richtungen, sodass die erste Kontaktfläche den ersten Seitenflächenabschnitt überstreicht; Erfassen eines Maßes für einen zwischen dem ersten elektrischen Kontakt und dem zweiten elektrischen Kontakt durch das ferroelektrische Medium fließenden Strom und Regeln der elektrischen Spannung, sodass eine Abweichung des Stroms von einem Soll-Polungsstrom minimal ist. Erfindungsgemäß ist der zweite elektrische Kontakt ein Ionenleiter.

Fig. 1

**Beschreibung**

Die vorliegende Erfindung betrifft ein Verfahren zum Polen eines ferroelektrischen Mediums mit einer ersten Seitenfläche und einer der ersten Seitenfläche gegenüber angeordneten zweiten Seitenfläche, sodass das ferroelektrische Medium ein erstes Volumensegment und ein zweites Volumensegment aufweist, wobei die spontane Polarisierung des ferroelektrischen Mediums in dem ersten Volumensegment eine erste Orientierung und in dem zweiten Volumensegment eine zweite Orientierung aufweist und wobei die erste Orientierung und die zweite Orientierung voneinander verschieden sind. Das erste Volumensegment ist durch einen ersten Seitenflächenabschnitt der ersten Seitenfläche und einem zweiten Seitenflächenabschnitt der zweiten Seitenfläche definiert und das zweite Volumensegment ist durch einen dritten Seitenflächenabschnitt der ersten Seitenfläche und einen vierten Seitenflächenabschnitt der zweiten Seitenfläche definiert. Dabei weist das Verfahren die Schritte auf: Bereitstellen des ferroelektrischen Mediums; Aufbringen einer ersten Kontaktfläche eines ersten elektrischen Kontakts auf den ersten Seitenflächenabschnitt, wobei die erste Kontaktfläche kleiner ist als der erste Seitenflächenabschnitt; Aufbringen einer zweiten Kontaktfläche eines zweiten elektrischen Kontakts auf die zweite Seitenfläche, wobei die zweite Kontaktfläche zumindest den zweiten Seitenflächenabschnitt bedeckt; Anlegen einer elektrischen Spannung zwischen dem ersten elektrischen Kontakt und dem zweiten elektrischen Kontakt; Ausführen einer Relativbewegung zwischen der ersten Kontaktfläche und dem ferroelektrischen Medium in zwei zueinander senkrechten Richtungen, sodass die erste Kontaktfläche den ersten Seitenflächenabschnitt überstreicht; Erfassen eines Maßes für einen zwischen dem ersten elektrischen Kontakt und dem zweiten elektrischen Kontakt durch das ferroelektrische Medium fließenden Strom und Regeln der elektrischen Spannung, sodass eine Abweichung des Stroms von einem Soll-Polungsstrom minimal ist.

Die vorliegende Erfindung betrifft zudem ein System zum Polen eines ferroelektrischen Mediums mit einer ersten Seitenfläche und einer der ersten Seitenfläche gegenüberliegend angeordneten zweiten Seitenfläche, sodass das ferroelektrische Medium ein erstes Volumensegment und ein zweites Volumensegment aufweist. Dabei weist das System auf: Eine Aufnahme zum Aufnehmen des ferroelektrischen Mediums in einem Betrieb des Systems; einen ersten elektrischen Kontakt mit einer ersten Kontaktfläche, wobei der erste elektrische Kontakt derart ausgestaltet und angeordnet ist, dass die erste Kontaktfläche in dem Betrieb des Systems auf einen ersten Seitenflächenabschnitt der ersten Seitenfläche des an dem Halter aufgenommenen ferroelektrischen Mediums aufbringbar ist; einen zweiten elektrischen Kontakt mit einer zweiten Kontaktfläche, wobei der zweite elektrische Kontakt derart ausgestaltet und angeordnet ist, dass die zweite Kontaktfläche in dem Betrieb des Systems auf einen zweiten Seitenflächenabschnitt der zweiten Seitenfläche des in der Aufnahme aufgenommenen ferroelektrischen Mediums aufbringbar ist; eine elektrische Spannungsquelle, wobei die Spannungsquelle derart mit dem ersten und dem zweiten elektrischen Kontakt verbunden ist, dass in dem Betrieb des Systems eine elektrische Spannung zwischen den ersten und zweiten Kontaktflächen anlegbar ist; eine Strommesseinrichtung, wobei die Strommesseinrichtung derart ausgestaltet und angeordnet ist, dass sie in dem Betrieb des Systems ein Maß für einen zwischen dem ersten elektrischen Kontakt und dem zweiten elektrischen Kontakt durch das ferroelektrische Medium fließenden Strom erfasst; einen Aktor, wobei der Aktor derart ausgestaltet und angeordnet ist, dass der Aktor in dem Betrieb des Systems eine Relativbewegung zwischen der ersten Kontaktfläche und dem Halter bewirkt; und eine Steuer- und Regeleinrichtung, wobei die Steuer- und Regeleinrichtung derart wirksam mit dem Aktor verbunden ist, dass in dem Betrieb des Systems der Aktor ein Aktorsteuersignal von der Steuer- und Regeleinrichtung empfängt, wobei die Steuer- und Regeleinrichtung derart wirksam mit der Strommesseinrichtung verbunden ist, dass die Steuer- und Regeleinrichtung in dem Betrieb des Systems das Maß für den Strom von der Strommesseinrichtung empfängt, wobei die Steuer- und Regeleinrichtung derart wirksam mit der Spannungsquelle verbunden ist, dass in dem Betrieb des Systems die Spannungsquelle ein Spannungssteuersignal von der Steuer- und Regeleinrichtung empfängt, und wobei die Steuer- und Regeleinrichtung derart eingerichtet ist, dass die Steuerund Regeleinrichtung in dem Betrieb des Systems das Aktorsteuersignal derart erzeugt und ausgibt, dass die erste Kontaktfläche den ersten Seitenflächenabschnitt des an dem Halter aufgenommenen ferroelektrischen Mediums überstreicht, und die Steuer- und Regeleinrichtung in dem Betrieb des Systems das Spannungssteuersignal derart erzeugt und ausgibt, dass eine Abweichung des Werts für den Strom von einem Wert für einen Soll-Polungsstrom minimal ist.

Ferroelektrische Medien, insbesondere ferroelektrische Kristalle, zeigen oftmals eine hohe Nichtlinearität bei der Wechselwirkung mit elektromagnetischen Feldern. Ferroelektrische Medien weisen zudem den Vorteil auf, dass sie sich abschnittsweise polen bzw. ausgehend von einer vorgegebenen homogenen Polung des jeweiligen Mediums abschnittsweise umpolen lassen.

Diese Möglichkeit zur abschnittsweisen Ausbildung von Domänen oder Volumensegmenten mit voneinander verschiedener, vorzugsweise entgegengesetzter, Orientierung ihrer spontanen Polarisierung macht ferroelektrische Medien zur Quasi-Phasenanpassung geeignet. Bei nichtlinearen optischen Prozessen werden ein oder mehrere elektromagnetische Felder durch ein Ausbreitungsmedium mit nichtlinearer Suszeptibilität geleitet, um ein oder mehrere neue elektromagnetische Felder mit einer anderen Frequenz zu erzeugen. Damit dies effizient gelingen kann, müssen die generierten Elementarwellen in Phase sein, d.h. eine feste Beziehung zwischen ihren Oszillationen aufweisen. Nur dann tritt keine destruktive Interferenz auf und die Effizienz der Umwandlung bleibt hoch. Auch in Medien, die diese Phasenanpassungsbedingung nicht erfüllen, ist es möglich, eine destruktive Interferenz wirksam zu vermeiden, indem die Orientierung der spontanen Polarisierung in verschiedenen Abschnitten des nichtlinearen Mediums verschieden ausgerichtet oder umgekehrt wird. Die Phasen der erzeugten Elementarwellen aus einem umgepolten Volumensegment erfahren einen Phasensprung gegenüber erzeugten Elementarwellen aus einem nicht umgepolten Volumensegment. So ist ein konstruktives Aufsummieren der elektromagnetischen Felder über lange Ausbreitungsstrecken möglich.

Zum Polen bzw. Umpolen von ferroelektrischen Medien sind aus dem Stand der Technik eine Reihe von Verfahren bekannt. Alle setzen voraus, dass ein ferroelektrisches Medium mit einer über die Länge des Mediums hinweg identischen Orientierung der spontanen Polarisierung bereitgestellt wird. Dann werden einzelne Volumensegmente durch Anlegen eines elektrischen Feldes selektiv gepolt oder umgepolt, sodass sie eine von der zunächst vorgegebenen Orientierung abweichende Orientierung der spontanen Polarisierung aufweisen.

Dabei ist es zunehmend das Ziel, komplexere Polungsstrukturen in ferroelektrischen Materialien zu realisieren. Solche komplexeren Strukturen sind mit konventionellen Verfahren zum Polen, wie zum Beispiel dem Polen mit Hilfe von Elektrodenmasken, die auf gegenüberliegende erste und zweite Seitenflächen des jeweiligen Mediums aufgebracht werden, nur schwer realisierbar.

Als gut geeignet zum Bereitstellen von komplexen räumlichen Polungsstrukturen in ferroelektrischen Medien hat sich das sogenannte kaligraphische Polen erwiesen. Dabei wird auf einer ersten Seitenfläche die Kontaktfläche eines ersten elektrischen Kontakts, vorzugsweise in Form einer Nadel, so bewegt, dass sie seriell die einzelnen Flächenabschnitte, welche die umzupolenden Volumensegmente begrenzen, überstreicht. Eine zweite Seitenfläche des ferroelektrischen Mediums, die der ersten Seitenfläche gegenüberliegt ist typischerweise vollständig von einer flächigen, planaren Elektrode bedeckt. Die Polungsstruktur wird damit gewissermaßen in das ferroelektrische Medium "geschrieben".

Dieses aus dem Stand der Technik bekannte kaligraphische Polen führt bei dünnen ferroelektrischen Medien zu guten Ergebnissen, versagt aber beim Polen von dicken Medien. Die in Betracht kommenden ferroelektrischen Medien zeigen ein deutlich anisotropes Polungsverhalten. Das bedeutet, dass die zum Polen notwendige Spannung zwischen den beiden Elektroden erheblich entlang der Bewegungsrichtung der ersten Kontaktfläche auf der ersten Seitenfläche des ferroelektrischen Mediums variiert.

Man kann das anisotrope Polungsverhalten des ferroelektrischen Mediums dadurch kompensieren, dass man die Spannung zwischen dem ersten und dem zweiten elektrischen Kontakt in Abhängigkeit von dem zwischen dem ersten und dem zweiten elektrischen Kontakt fließenden Strom regelt, sodass ein vorgegebener Soll-Strom eingehalten wird und der fließende Strom entlang des Bewegungspfads der ersten Kontaktfläche hinweg im Wesentlichen konstant ist. Diese Kompensation ist allerdings überraschenderweise nur für vergleichsweise dünne ferroelektrische Medien erfolgreich.

Dem gegenüber ist es eine Aufgabe der vorliegenden Erfindung, ein Verfahren und eine Vorrichtung zum Polen eines ferroelektrischen Mediums bereitzustellen, die auch für dicke ferroelektrische Medien geeignet sind. Darüber hinaus ist es eine Aufgabe der vorliegenden Erfindung, ein Verfahren und eine Vorrichtung zum Polen eines ferroelektrischen Mediums bereitzustellen, die es ermöglichen, komplexe Polungsstrukturen bereitzustellen.

Zumindest eine der zuvor genannten Aufgaben wird durch ein Verfahren zum Polen eines ferroelektrischen Mediums gemäß dem beigefügten unabhängigen Anspruch 1 gelöst. Dazu ist bei dem Verfahren der eingangs genannten Art der zweite elektrische Kontakt ein Ionenleiter. Dann ist das erfasste Maß für den zwischen dem ersten elektrischen Kontakt und dem zweiten elektrischen Kontakt fließenden Strom das Maß für den Polungsstrom.

Der Polungsstrom bezeichnet den aufgrund der Umpolung durch das ferroelektrische Medium fließenden Strom. Dabei ist der Polungsstrom proportional zu der umgepolten Fläche pro Zeit. Zu betrachten ist dabei die Fläche eines Flächenabschnitts der ersten Seitenfläche, der ein umgepoltes Volumensegment begrenzt, das in einer Zeitspanne umgepolt wird. Der Polungsstrom $I_{pol}$ ist dann für eine vollständige Umpolung, bei der die ursprüngliche spontane Polarisierung und die umgepolte spontane Polarisierung einander um 180 Grad entgegengesetzt sind, gegeben als

$$I_{pol} = 2 \cdot P_s \cdot \frac{A}{t},$$

wobei $P_S$ die spontane Polarisierung des Mediums und $\frac{A}{t}$ die umgepolte Fläche $A$ pro Zeit $t$. Gelingt es die zur Umpolung angelegte Spannung auf den Polungsstrom zu regeln, so lässt sich die Polungsanisotropie kompensieren.

Es hat sich herausgestellt, dass die im Stand der Technik verwendeten metallischen Leiter für den zweiten elektrischen Kontakt zumindest bei dicken ferroelektrischen Medien nicht zum gewünschten Ergebnis, nämlich homogenen umgepolten Volumensegmenten, führen. Dies ist darauf zurückzuführen, dass metallische Leiter, die auf einer Elektronenleitung beruhen, in dem Bereich der Domänenwände mit der zweiten Seitenfläche des ferroelektrischen Mediums einen ohmschen Kontakt mit dem ferroelektrischen Medium ausbilden. Der ohmsche Kontakt führt aber dazu, dass der zwischen den Kontakten durch das ferroelektrische Medium fließende und für die Regelung der Polungsspannung erfasste Strom primär durch parasitäre Ströme entlang der sich zwischen den umgepolten und nicht umgepolten Volumensegmenten ausbildenden Domänenwände bestimmt ist. Diese Domänenwände sind hochgradig elektrisch leitfähig. Daher setzt sich der im Stand der Technik gemessene, zwischen dem ersten und dem zweiten elektrischen Kontakt fließende Strom aus dem Polungsstrom und einem parasitären Strom entlang der Domänenwände zusammen. Daher regelt man im Falle eines im Bereich der Domänenwände ohmschen Kontakts die Spannung nicht auf den Polungsstrom, sondern vielmehr auf den parasitären Strom entlang der Domänenwände. Eine Kompensation des anisotropen Polungsverhalten des ferroelektrischen Mediums ist auf diese Weise nicht oder nur unzureichend möglich.

Der vorliegenden Erfindung liegt daher die Idee zu Grunde, den zweiten elektrischen Kontakt als Ionenleiter auszubilden. Ein Ionenleiter bildet zumindest im Bereich der Domänenwände einen nicht-ohmschen, diodenartigen Kontakt mit dem ferroelektrischen Medium aus. So werden die parasitären, auf die Domänenwände zurückgehenden Ströme unterdrückt und es gelingt, die Spannung auf den Polungsstrom zu regeln.

Die ersten und zweiten Volumensegmente des ferroelektrischen Mediums werden häufig auch als Domänen des Mediums bzw. des Kristalls bezeichnet. Dabei bezeichnet eine Domäne des ferroelektrischen Mediums ein zusammenhängendes Volumensegment des ferroelektrischen Mediums, in dem die spontane Polarisierung des ferroelektrischen Mediums die gleiche Orientierung aufweist. Die ersten und zweiten Seitenflächenabschnitte des ersten Volumensegments auf den gegenüberliegenden ersten und zweiten Seitenflächen des ferroelektrischen Mediums definieren das erste Volumensegment, d.h. sie begrenzen sein Volumen. Die dritten und vierten Seitenflächenabschnitte des zweiten Volumensegments auf den gegenüberliegenden ersten und zweiten Seitenflächen des ferroelektrischen Mediums definieren das zweite Volumensegment, d.h. sie begrenzen sein Volumen.

Um das Domänenwachstum anzuregen, wird eine elektrische Spannung zwischen den beiden Kontaktflächen angelegt. Die Polarität der Spannung richtet sich nach der Orientierung des Mediums und das Spannungsniveau richtet sich nach der Dicke und der Koerzitivfeldstärke des zu polenden ferroelektrischen Mediums. Gemäß der vorliegenden Erfindung richtet sich die Polarität auch nach der Sperrrichtung des diodenartigen Kontakts zwischen dem zweiten elektrischen Kontakt und der zweiten Seitenfläche im Bereich der Domänenwände. Es kann sowohl eine konstante als auch eine zeitlich variierende, gepulste Spannung angelegt werden. In einer Ausführungsform der Erfindung beträgt die Spannung 1000 Volt oder mehr.

Es versteht sich, dass die Spannung zwischen dem ersten und dem zweiten elektrischen Kontakt an einer Mehrzahl oder an allen Punkten angelegt sein muss, welche die erste Kontaktfläche innerhalb des ersten Seitenflächenabschnitts überstreicht.

Im Sinne der vorliegenden Anmeldung wird als Länge des ferroelektrischen Mediums bzw. eines Volumensegments seine Erstreckung in der gewünschten Ausbreitungsrichtung der elektromagnetischen Strahlung in dem ferroelektrischen Medium bezeichnet. Diese Ausbreitungsrichtung wird auch als Längenrichtung des ferroelektrischen Mediums bezeichnet. Die Dicke bezeichnet die Erstreckung des ferroelektrischen Mediums in einer Dickenrichtung, wobei die Dickenrichtung senkrecht zu der Längenrichtung und senkrecht zu der zweiten Kontaktfläche ist. Die Dickenrichtung fällt typischerweise mit der Orientierung der spontanen Polarisierung zusammen. Die Breite des ferroelektrischen Mediums ist seine Erstreckung in einer Breitenrichtung senkrecht zu der Längenrichtung und senkrecht zu der Dickenrichtung.

In einer Ausführungsform der Erfindung sind die Oberflächennormalen der ersten und zweiten Seitenflächen des ferroelektrischen Mediums parallel zueinander, zeigen aber voneinander weg.

In einer Ausführungsform hat ein solches ferroelektrisches Medium eine Dicke senkrecht zu der zweiten Kontaktfläche von 500 µm oder mehr.

Es versteht sich, dass der erste Seitenflächenabschnitt, welcher das erste Volumensegment auf der ersten Seitenfläche begrenzt, kleiner ist als die erste Seitenfläche. Der zweite Seitenflächenabschnitt, welcher das erste Volumensegment auf der zweiten Seitenfläche begrenzt, ist kleiner als die zweite Seitenfläche. Vorzugsweise sind die ersten und zweiten Seitenflächenabschnitte eines ersten Volumensegments jeweils im Wesentlichen kongruent zueinander.

In einer Ausführungsform der Erfindung erfolgt das Ausführen der Relativbewegung zwischen der ersten Kontaktfläche und dem ersten Seitenflächenabschnitt des ferroelektrischen Mediums nacheinander in zwei zueinander senkrechten Richtungen. Dabei erfolgt in einer Ausführungsform der Erfindung das Ausführen der Relativbewegung zeilenweise. Dabei wird in einer Ausführungsform der erste Kontakt mit der ersten Kontaktfläche zunächst in einer ersten Richtung über eine erste Zeile hinweg bewegt. Dann wird die erste Kontaktfläche in einer zu der ersten Richtung senkrechten zweiten Richtung in eine zweite Zeile verschoben, um daraufhin erneut in oder entgegen der ersten Richtung über die zweite Zeile hinweg bewegt zu werden.

In einer dazu alternativen Ausführungsform erfolgt das Ausführen der Relativbewegung zwischen der ersten Kontaktfläche und dem ersten Seitenflächenabschnitt des ferroelektrischen Mediums entlang einer einzigen, vorzugsweise linearen, Linie. Weist das ferroelektrischen Medium eine Mehrzahl von ersten Seitenflächenabschnitten auf, so führt die erste Kontaktfläche in einer Ausführungsform für jeden ersten Seitenflächenabschnitt eine Relativbewegung entlang genau einer, vorzugsweise linearen, Linie aus. Dabei verläuft die, vorzugsweise lineare, Linie in einer Ausführungsform in der Dickenrichtung des ferroelektrischen Mediums. In einer Ausführungsform verläuft die lineare Linie unter einem von 90 Grad verschiedenen Winkel zu der Längenrichtung. Die Relativbewegung entlang einer einzigen Linie für einen ersten Seitenflächenabschnitt ermöglicht aufgrund des Verlaufs der sich von der ersten Kontaktfläche zu der zweiten Kontaktfläche erstreckenden Feldlinien dennoch das Umpolen von ersten Volumensegmenten mit einer endlichen, definierten Ausdehnung in der Längenrichtung.

In einer Ausführungsform wird die Spannung derart geregelt, dass der gemessene Strom entlang der Linie der Relativbewegung gleich einem konstanten Soll-Polungsstrom ist. In einer alternativen Ausführungsform wird die Spannung derart geregelt, dass der gemessene Strom entlang der Linie der Relativbewegung gleich einem sich entlang der Linie ändernden Soll-Polungsstrom ist. Durch das Ändern des Soll-Polungsstroms entlang der Linie in der Dickenrichtung des ferroelektrische Mediums ist es möglich, mit einem einzigen Überstreichen des ferroelektrischen Mediums ein erstes Volumensegment mit einem ersten Seitenflächenabschnitt zu schreiben, wobei der erste Seitenflächenabschnitt eine sich ändernde Länge in der Längenrichtung des ferroelektrischen Mediums aufweist. Beispielsweise ist es auf diese Weise möglich, ein erstes Volumensegment umzupolen, dessen erster Seitenflächenabschnitt trapezförmig ist.

Das serielle "Schreiben" des ersten Seitenflächenabschnitts auf der ersten Seitenfläche des ersten Volumensegments ermöglicht die Ausgestaltung von komplexen Polungsstrukturen. Ein Beispiel für eine solche komplexe Polungsstruktur ist ein gepoltes ferroelektrisches Medium mit einer in der Breitenrichtung des Mediums variierenden Polungsperiode.

In einer Ausführungsform der Erfindung erfolgt das Ausführen der Relativbewegung zwischen der ersten Kontaktfläche und dem ferroelektrischen Medium derart, dass der erste Seitenflächenabschnitt trapezförmig ist. Es versteht sich, dass für eine solche Trapezform des ersten Seitenflächenabschnitts durch die Relativbewegung zwischen dem ersten elektrischen Kontakt bzw. dessen erster Kontaktfläche und dem ferroelektrischen Medium in zwei zueinander senkrechten Richtungen erfolgen muss.

In einer Ausführungsform der Erfindung ist der erste elektrische Kontakt von einer Nadel gebildet, wobei vorzugsweise die erste Kontaktfläche eine Spitze der Nadel ist. In einer Ausführungsform der Erfindung ist der erste elektrische Kontakt eine Nadel aus einem Hartmetall.

In einer Ausführungsform ist darauf zu achten, dass das nadelförmige Element eine möglichst glatte erste Kontaktfläche ausbildet.

Da in einer Ausführungsform aufgrund der Feldlinienverläufe der erste Seitenflächenabschnitt des ferroelektrischen Mediums, welcher das umgepolte Volumensegment begrenzt, über den tatsächlich von der ersten Kontaktfläche überstrichenen Bereich der ersten Seitenfläche hinausgeht, überstreicht in einer Ausführungsform der Erfindung der erste elektrische Kontakt den ersten Seitenflächenabschnitt nur teilweise. In einer Ausführungsform der Erfindung überstreicht der erste elektrische Kontakt den ersten Seitenflächenabschnitt vollständig.

In einer Ausführungsform der Erfindung wird das Maß für den Strom indirekt gemessen, wobei als indirekte Messung ein Strom zwischen dem zweiten Kontakt und Masse genutzt wird. Da es in dem ferroelektrischen Medium keine Stromsenken und -quellen gibt, entspricht dieser Strom zwischen dem zweiten Kontakt und Masse erfindungsgemäß auch dem Polungsstrom durch das ferroelektrische Medium.

Ein Aufbringen der ersten oder zweiten Kontaktfläche auf den jeweiligen ersten oder zweiten Seitenflächenabschnitt umfasst ein mechanisches Inkontaktbringen der jeweiligen Kontaktfläche mit dem Seitenflächenabschnitt, sodass sich beim Anlegen einer elektrischen Spannung zwischen dem ersten elektrischen Kontakt und dem zweiten elektrischen Kontakt ein elektrisches Feld zwischen der ersten Kontaktfläche und der zweiten Kontaktfläche erstreckt.

Grundsätzlich ist das erfindungsgemäße Verfahren geeignet, ein ferroelektrisches Medium mit genau zwei Volumensegmenten, d.h. dem ersten Volumensegment und dem zweiten Volumensegment, mit voneinander abweichender Orientierung der spontanen Polarisierung zu erzeugen. In diesem Fall wird lediglich eine Umpolung des ferroelektrischen Mediums in dem ersten Volumensegment bewirkt.

Strukturen für die Quasi-Phasenanpassung weisen jedoch überwiegend eine Vielzahl von Domänen bzw. Volumensegmenten auf. Dabei sind abwechselnd Domänen mit voneinander verschiedener spontaner Polarisierung angeordnet. In einer Ausführungsform ist eine solche Anordnung der Volumensegmente periodisch, d.h. in Richtung eines durch das ferroelektrische Medium propagierenden Strahls von elektromagnetischer Strahlung bilden die ersten und zweiten Volumensegmente eine sich wiederholende Struktur. Allerdings sind auch Ausführungsformen mit einer aperiodischen Anordnung einer Mehrzahl von ersten und zweiten Volumensegmenten möglich. In einer Ausführungsform haben die ersten und zweiten Volumensegmente mit voneinander verschiedener spontaner Polarisierung die gleiche Länge in der Längenrichtung.

Daher weist in einer Ausführungsform das ferroelektrische Medium nach dem Ausführen des erfindungsgemäßen Verfahrens eine Mehrzahl von ersten Volumensegmenten und eine Mehrzahl von zweiten Volumensegmenten auf, wobei die ersten und zweiten Volumensegmente in Strahlrichtung einander abwechseln. Es versteht sich, dass zum Herstellen eines gepolten ferroelektrischen Mediums mit einer Mehrzahl von ersten und einer Mehrzahl von zweiten Volumensegmenten die Mehrzahl von ersten Volumensegmenten mit den in dem unabhängigen Anspruch definierten Schritten auszubilden bzw. zu schreiben ist.

Die zweite Kontaktfläche des zweiten elektrischen Kontakts bedeckt in einer Ausführungsform nur den zweiten Seitenflächenabschnitt des zweiten Volumensegments oder die zweiten Seitenflächenabschnitte aller zweiten Volumensegmente. In einer Ausführungsform bedeckt die zweite Kontaktfläche des zweiten elektrischen Kontakts zusätzlich auch den vierten Seitenflächenabschnitt des zweiten Volumensegments oder die vierten Seitenflächenabschnitte aller zweiten Volumensegmente.

In einer Ausführungsform der Erfindung wird der erste elektrische Kontakt während dem Ausführen der Relativbewegung gegenüber dem ferroelektrischen Medium in eine Schwingungsbewegung versetzt, sodass die erste Kontaktfläche zumindest in der Ebene der ersten Seitenfläche oder senkrecht zu der Ebene der ersten Seitenfläche schwingt. Eine solche Schwingungsbewegung reduziert die Haftreibung zwischen dem elektrischen Kontakt und der Seitenfläche des ferroelektrischen Mediums während dem Überstreichen des ersten Seitenflächenabschnitts.

In einer Ausführungsform der Erfindung umfasst das Verfahren weiterhin den Schritt: Ausführens der Relativbewegung zwischen der ersten Kontaktfläche und dem ferroelektrischen Medium, wobei das ferroelektrischen Mediums aufgeheizt ist, vorzugsweise auf eine Temperatur über der Raumtemperatur (21 °C). Die Temperatur des ferroelektrischen Mediums, bei der das Umpolen erfolgt, wird auch als Polungstemperatur bezeichnet. In einer Ausführungsform der Erfindung wird das ferroelektrische Medium auf eine Temperatur von 50 °C oder mehr, vorzugsweise von 100 °C oder mehr aufgeheizt. In einer Ausführungsform der Erfindung ist die Temperatur des aufgeheizten ferroelektrischen Mediums während dem Umpolen geringer als die Curie-Temperatur des jeweiligen ferroelektrischen Mediums.

Das Schreiben der Polungsstruktur bei erhöhter Temperatur des ferroelektrischen Mediums verringert die Polungsanisotropie. Ohne weitere Maßnahmen würde das Aufheizen jedoch voraussetzen, dass der zweite Kontakt ein metallischer Leiter ist, der den erhöhten Temperaturen über die Zeitdauer des Umpolens standhält. Bei dem erfindungsgemäßen Einsatz eines Ionenleiters gilt es, ein Verdampfen des Ionenleiters zu verhindern.

Durch das Aufheizen und das gleichzeitige Regeln der Spannung auf den Polungsstrom lässt sich das anisotrope Polungsverhalten des ferroelektrischen Mediums beinahe vollständig kompensieren.

In einer Ausführungsform der Erfindung kann das Aufheizen des ferroelektrischen Mediums mit Hilfe einer elektromagnetischen Strahlungsquelle, beispielsweise mit einer IR-Lampe oder in einem Mikrowellenofen, eines Wärmebads oder einer kontaktgekoppelten Heizplatte erfolgen.

In einer Ausführungsform der Erfindung umfasst der zweite elektrische Kontakt einen festen oder flüssigen Elektrolyten. Ein Elektrolyt ist eine chemische Verbindung, die im festen oder flüssigen Zustand in Ionen dissoziiert ist und die sich unter dem Einfluss eines elektrischen Feldes gerichtet bewegen. Die Leitung des elektrischen Stroms in einem solchem Elektrolyten ist ionisch. Die elektrische Leitfähigkeit solcher Ionenleiter ist typischerweise geringer als es beispielsweise für Metalle mit ihrer elektronischen Leitung der Fall ist. Elektrolyte werden daher auch als Leiter zweiter Klasse bezeichnet.

Als Elektrolyt kommen alle Festkörper und alle Flüssigkeiten in Frage, die bei der Temperatur, bei der das Umpolen erfolgt, bewegliche Ionen enthalten.

In einer Ausführungsform der Erfindung ist der Elektrolyt NaCl, LiCl oder $CaCl_2$.

In einer Ausführungsform der Erfindung umfasst der zweite elektrische Kontakt ein flüssiges Lösungsmittel.

In einer Ausführungsform der Erfindung ist das flüssige Lösungsmittel Wasser oder Glycerin.

In einer Ausführungsform der Erfindung hat die Lösung des Elektrolyts in einer Flüssigkeit einen Siedepunkt, der höher ist als die Polungstemperatur.

Beispiele für einen geeigneten flüssigen Ionenleiter ist eine Salzlösung mit Glycerin als Lösungsmittel und einem Salz, beispielsweise NaCl, LiCl, $CaCl_2$ als Elektrolyt. In einer Ausführungsform ist der Ionenleiter eine gesättigte Lösung von $CaCl_2$ als Elektrolyt in $H_2O$ als Lösungsmittel. Eine solche Salzlösung weist eine Siedetemperatur von mehr als 200 °C auf.

Ferroelektrische Medien im Sinne der vorliegenden Anmeldung umfassen insbesondere ferroelektrische, nichtlinear optische Kristalle, beispielsweise aus Lithiumniobat, Lithiumtantalat, Kaliumtitanylphoshpat oder Bariummagnesiumfluorid.

In einer Ausführungsform der Erfindung ist das ferroelektrische Medium ein Oxidkristall oder ein Fluoridkristall. Beispiele für Oxidkristalle sind: $LiNbO_s$, $LiTaO_s$, $KTiOPO_4$, $LaBGeO_s$. Ein Beispiel für einen Fluoridkristall ist $BaMgF_4$.

In einer Ausführungsform ist das Lithiumniobat oder das Lithiumtantalat mit MgO-dotiert. In einer Ausführungsform ist das Lithiumniobat oder das Lithiumtantalat kongruent oder stöchiometrisch.

In einer Ausführungsform der Erfindung umfasst das Verfahren weiterhin den Schritt: Aufbringen eines Öls auf die erste Seitenfläche um den ersten elektrischen Kontakt herum. Ein solches Öl wird verwendet, um eine Koronaentladung in der Umgebung des ersten elektrischen Kontakts zu vermeiden. Ein Beispiel für ein geeignetes Öl ist Silikonöl, beispielsweise Transformatorenöl. Ein solches Öl weist eine Siedetemperatur auf, die größer ist als die Polungstemperatur.

In einer alternativen Ausführungsform wird die Umgebung des ferroelektrischen Mediums mit einem geeigneten Schutzgas, beispielsweise Schwefelhexafluorid (SF$_6$) beaufschlagt.

Zumindest eine der zuvor genannten Aufgaben wird ferner auch durch ein System zum Polen eines ferroelektrischen Mediums gemäß dem beigefügten, darauf gerichteten unabhängigen Anspruch gelöst. Dazu weist das System der eingangs genannten Art einen Ionenleiter als zweiten elektrischen Kontakt auf.

Soweit zuvor Aspekte der Erfindung im Hinblick auf das Verfahren zum Polen eines ferroelektrischen Mediums beschrieben wurden, so gelten diese auch für das entsprechende System zum Polen des ferroelektrischen Mediums und umgekehrt. Soweit das Verfahren mit einem System gemäß dieser Erfindung ausgeführt wird, so weist dieses die entsprechenden Einrichtungen hierfür auf. Insbesondere sind Ausführungsformen des Systems zum Ausführen der zuvor beschriebenen Ausführungsformen des Verfahrens geeignet.

In einer Ausführungsform der Erfindung wird der Ionenleiter des zweiten elektrischen Kontakts gebildet durch Tränken eines Vliesstoffs mit der flüssigen Lösung aus Elektrolyt und Lösungsmittel. Das ferroelektrische Medium wird dann auf diesen getränkten Vliesstoff aufgelegt. Der Vliesstoff verhindert einen direkten elektrisch leitenden Kontakt zu einer unter dem Vliesstoff angeordneten metallischen Elektrode, die zur Spannungsbeaufschlagung des ionischen Leiters erforderlich ist.

Weitere Vorteile, Merkmale und Anwendungsmöglichkeiten der vorliegenden Erfindung werden anhand der folgenden Beschreibung von Ausführungsformen und der dazugehörigen Figuren deutlich. In den Figuren sind gleiche Elemente mit identischen Bezugszeichen bezeichnet.

Figur 1    ist eine schematische Darstellung einer erfindungsgemäßen Ausführungsform eines Systems zum Polen eines ferroelektrischen Mediums.

Figur 2    ist eine schematische Darstellung einer weiteren erfindungsgemäßen Ausführungsform eines Systems zum Polen eines ferroelektrischen Mediums.

Figur 3    ist eine schematische Draufsicht eines mit einem System aus Figur 1 oder 2 gepolten nichtlinear optischen Kristalls.

Das Verfahren zum Polen eines ferroelektrischen Mediums 2 gemäß der vorliegenden Erfindung wird anhand zweier Ausführungsformen des Systems 1 erläutert. Ziel des hier beispielhaft beschriebenen Verfahrens ist es, eine komplexe Polungsstruktur in einen nichtlinear optischen Lithiumniobat-Kristall 2 als ferroelektrischem Medium zu schreiben.

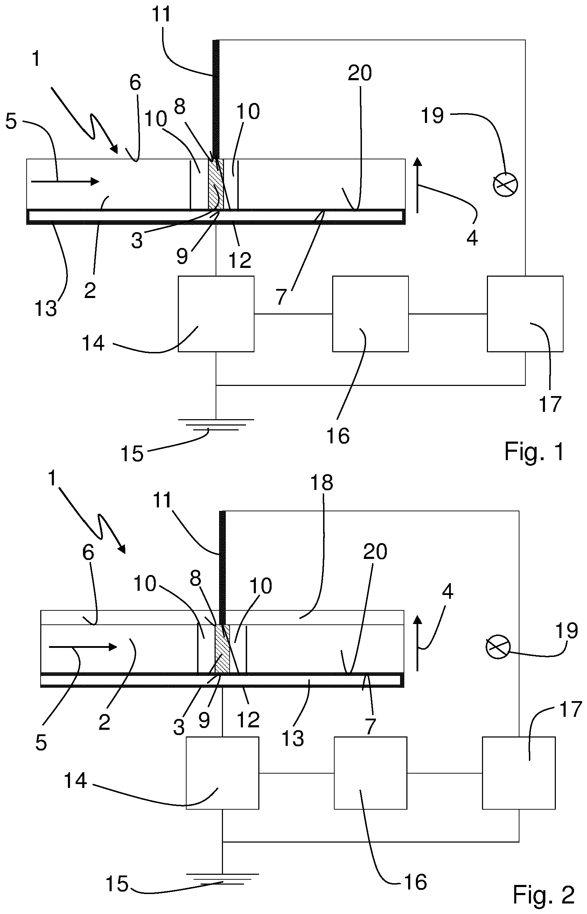

Die Figuren 1 und 2 zeigen jeweils eine schematische Seitenansicht eines Systems zum Polen des Lithiumniobat-Kristalls 2. Jede der Darstellungen der Figuren 1 und 2 zeigt eine Draufsicht von der Seite auf die Längserstreckung des Kristalls 2.

In den Figuren 1 und 2 sind in dem Kristall 2 beispielhaft jeweils nur ein einziges erstes Volumensegment bzw. eine erste Domäne 3 und die zwei angrenzenden zweiten Volumensegmente oder zweiten Domänen 10 dargestellt.

Im Sinne der vorliegenden Erfindung wird als Dicke des Kristalls seine Erstreckung in der mit dem Bezugszeichen 4 bezeichneten Dickenrichtung benannt. Demgegenüber ist die Länge des Kristalls gemessen in der Längenrichtung 5. Auch die Strahlachse der elektromagnetischen Strahlung bei Verwendung des Kristalls 2 erstreckt sich in der Längenrichtung 5. Die elektromagnetische Strahlung würde von links nach rechts oder umgekehrt in der Längenrichtung 5 durch den Kristall 2 propagieren, wenn der gepolte Kristall 2 in einen nichtlinear optischen Prozess eingesetzt wird.

Jeder der Kristalle 2 weist eine erste Seitenfläche 6 und eine zweite Seitenfläche 7 auf. Jede erste Domäne 3 wird auf der ersten Seitenfläche 6 von einem ersten Seitenflächenabschnitt 8 und auf der zweiten Seitenfläche 7 von einem zweiten Seitenflächenabschnitt 9 begrenzt. Mit anderen Worten ausgedrückt, begrenzen die ersten und zweiten Seitenflächenabschnitte 8, 9 das Volumen der ersten Domäne 3 in der Längenrichtung 5 und in einer zu der Längenrichtung 5 und der Dickenrichtung 4 senkrechten Breitenrichtung 19.

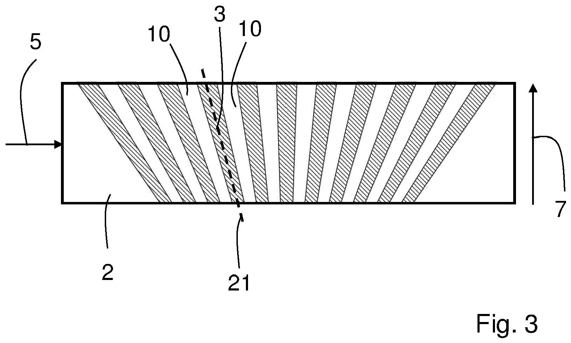

Jeder der Kristalle 2 weist nach der Durchführung des erfindungsgemäßen Verfahrens eine periodische Polungsstruktur auf, d.h. erste und zweite Domänen 3, 10 wiederholen sich regelmäßig. Dabei haben in einer Schnittebene parallel zur Längenrichtung 5 und senkrecht zu der Breitenrichtung 19 des Kristalls 2 in der gezeigten Ausführungsform zudem alle ersten und zweiten Domänen 3, 10 die gleiche Länge. Gut ist dies in Figur 3 zu erkennen, welche eine Draufsicht von oben auf den Kristall 2 aus Figur 3 ist.

Figur 3 zeigt eine mögliche komplexe Polungsstruktur des Kristalls 2, welche sich mit Hilfe des Verfahrens und des Systems erzeugen lässt. In der Ausführungsform der Figur 3 hat der fertig gepolte Kristall 2 eine periodische Polungsstruktur mit abwechselnd angeordneten ersten und zweiten Domänen 3, 10, wobei die Länge der ersten und zweiten Domänen 3, 10 und damit auch die Periodizität der Polungsstruktur in der Breitenrichtung 7 des Kristalls 2 variiert.

Zum Polen wird zwischen einem ersten Kontakt 11 mit einer ersten Kontaktfläche 12 auf der ersten Seitenfläche 6 und einem zweiten Kontakt 13 auf der zweiten Seitenfläche 7 des Kristalls 2 eine elektrische Spannung angelegt. Durch das Anlegen der elektrischen Spannung zwischen den beiden Kontakten 11, 13 wird die spontane Polarisierung des Kristalls innerhalb der ersten Domänen 3 dauerhaft anders ausgerichtet als die ursprüngliche spontane Polarisierung des Kristalls 2. Diese ursprüngliche spontane Polarisierung bleibt jedoch in den zweiten Domänen 10 erhalten. In den gezeigten Ausführungsformen sind nach dem Polen bzw. Umpolen der ersten Domänen 3 die spontane Polarisierung des Kristalls in den ersten Domänen 3 und die spontane Polarisierung in den zweiten Domänen 10 einander entgegengesetzt.

Es ist die grundlegende Idee des Verfahrens und des Systems 1 der vorliegenden Erfindung auch Kristalle mit einer Dicke in der Dickenrichtung 4 von mehr als 500 μm so polen zu können, dass sich das anisotrope Polungsverhalten des Kristalls 2 kompensieren lässt. Ohne weitere Maßnahmen variiert das elektrische Feld zwischen dem ersten und dem zweiten Kontakt 11, 13, welches erforderlich ist, um den Kristall 2 innerhalb des von dem ersten und zweiten Seitenflächenabschnitten 6, 7 begrenzten Volumensegments 3 umzupolen, entlang des Verfahrwegs der ersten Kontaktfläche 12 innerhalb des ersten Seitenflächenabschnitts 8.

Beim Umpolen der ersten Domänen 3 überstreicht die erste Kontaktfläche 12 des ersten Kontakts 11 den jeweiligen ersten Seitenflächenabschnitt 8 der ersten Seitenfläche 6 des Kristalls 2 entlang genau einer linearen Linie 21. In der dargestellten Ausführungsform bildet eine Nadel den ersten Kontakt 11.

Eine solche Ausführungsform erlaubt es, komplexe Polungsstrukturen, wie sie beispielsweise anhand der Figur 3 beschrieben sind, "zu schreiben", ohne dass die Polungsanisotropie des Kristalls 2 zu einem inhomogenen Umpolen der spontanen Polarisierung in den ersten Domänen 3 führen würde. Damit trotz des nur einmaligen Überstreichens des ersten Seitenflächenabschnitts 8 entlang der Linie 21 der erste Seitenflächenabschnitt eine Trapezform, d.h. eine sich in der Längenrichtung 5 ändernde Länge aufweist, wird der Soll-Polungsstrom bei der Relativbewegung variiert.

Zur Kompensation der Polungsanisotropie des Kristalls 2 setzt das erfindungsgemäße Verfahren auf eine Stromsteuerung der zwischen dem ersten Kontakt 11 und dem zweiten Kontakt 13 angelegten elektrischen Spannung. Dabei ist die Regelschleife derart ausgestaltet, dass der Strom auf den sich in der Dickenrichtung 7 des Kristalls 2 ändernden Soll-Polungsstrom eingeregelt wird. Dazu wird mit Hilfe eines Amperemeters 14 als Strommesseinrichtung ein Maß für den zwischen dem ersten Kontakt 11 und dem zweiten Kontakt 13 fließenden Strom gemessen. Dieses Maß für den Strom wird zwischen Masse 15 und dem zweiten Kontakt 13 gemessen. In der Annahme, dass der Kristall keine Ladungsträgerquellen oder Ladungsträgersenken aufweist, hängt dieser Strom zwischen dem zweiten Kontakt 13 und Masse 15 erfindungsgemäß unmittelbar und ausschließlich von dem durch den Kristall 2 selbst fließenden Polungsstrom ab. Eine Steuer- und Regeleinrichtung 16 regelt nun die Spannungsquelle 17 derart, dass das von dem Amperemeter 14 gemessene Maß für den Polungsstrom eine möglichst geringe Abweichung von dem vorgegebenen Soll-Polungsstrom aufweist.

Als problematisch hat sich im Stand der Technik erwiesen, dass zweite Kontakte in Form von elektronischen Leitern, wie zum Beispiel einer Metallschicht auf der zweiten Seitenfläche 7 des Kristalls 2, einen ohmschen Kontakt mit dem Kristall 2 im Bereich der Domänenwände ausbilden. Dann ist aber der gemessene Strom nicht der Polungsstrom, sondern stark verfälscht, da die Stromleitung durch den Kristall 2 von einem Stromfluss entlang der Domänenwände, d.h. den Grenzflächen zwischen den ersten Domänen 3 und den benachbarten zweiten Domänen 10 bestimmt ist. Dem gegenüber ist der zweite Kontakt 13 in dem erfindungsgemäßen System 1 ein ionischer Leiter. Ein solcher ionischer Leiter stellt im Bereich der Domänenwände einen diodenartigen Kontakt bereit, sodass entlang den Domänenwänden bei entsprechender Polung kein nennenswerter parasitärer Strom auf den zweiten Kontakt 13 fließt. Der gemessene Strom ist dann im Wesentlichen gleich dem Polungsstrom.

In den gezeigten Ausführungsformen ist der ionische Leiter eine Lösung aus Lithiumchlorid als Elektrolyt und Glycerin als Lösungsmittel. Diese Lösung für den elektrischen Kontakt 13 weist einen vergleichsweise hohen Siedepunkt auf, sodass der Kristall 2 während dem Schreiben der Polungsstruktur auf 150 °C erhitzt werden kann ohne dass der zweite elektrische Kontakt 13 während des Umpolens nennenswert verdampft.

In der Ausführungsform des Systems 1 aus Figur 2 ist auf die erste Seitenfläche 6 des Kristalls 2 zusätzlich ein Ölfilm 18 aufgetragen. Dieser verhindert das Entstehen von Koronaentladungen im Bereich der ersten Kontaktfläche 12 des ersten Kontakts 11.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

**Bezugszeichenliste**

1     System
2     Lithiumniobat-Kristall
3     erste Domäne
4     Dickenrichtung
5     Längenrichtung
6     erste Seitenfläche
7     zweite Seitenfläche
8     erster Seitenflächenabschnitt
9     zweiter Seitenflächenabschnitt
10    zweite Domäne
11    erster Kontakt
12    erste Kontaktfläche
13    zweiter Kontakt
14    Amperemeter
15    Masse
16    Steuer- und Regeleinrichtung
17    Spannungsquelle
18    Ölfilm
19    Dickenrichtung
20    zweite Kontaktfläche
21    gerade Linie

**Patentansprüche**

**1.** Verfahren zum Polen eines ferroelektrischen Mediums (2) mit einer ersten Seitenfläche (6) und einer der ersten Seitenfläche (6) gegenüberliegend angeordneten zweiten Seitenfläche (7), so dass das ferroelektrische Medium (2) ein erstes Volumensegment (3) und ein zweites Volumensegment (10) aufweist,

wobei die spontane Polarisierung des ferroelektrischen Mediums (2) in dem ersten Volumensegment (3) eine erste Orientierung und in dem zweiten Volumensegment (10) eine zweite Orientierung aufweist,
wobei die erste Orientierung und die zweite Orientierung voneinander verschieden sind,
wobei das erste Volumensegment (3) durch einen ersten Seitenflächenabschnitt (8) der ersten Seitenfläche (6) und einen zweiten Seitenflächenabschnitt (9) der zweiten Seitenfläche (7) definiert ist und

wobei das zweite Volumensegment (10) durch einen dritten Seitenflächenabschnitt der ersten Seitenfläche (6) und einen vierten Seitenflächenabschnitt der zweiten Seitenfläche (7) definiert ist, und
wobei das Verfahren die Schritte aufweist
Bereitstellen des ferroelektrischen Mediums (2),
Aufbringen einer ersten Kontaktfläche (12) eines ersten elektrischen Kontakts (11) auf den ersten Seitenflächenabschnitt (8),
wobei die erste Kontaktfläche (12) kleiner ist als der erste Seitenflächenabschnitt (8),
Aufbringen einer zweiten Kontaktfläche (20) eines zweiten elektrischen Kontakts (13) auf die zweite Seitenfläche (7),
wobei die zweite Kontaktfläche (20) zumindest den zweiten Seitenflächenabschnitt (9) bedeckt,
Anlegen einer elektrischen Spannung zwischen dem ersten elektrischen Kontakt (11) und dem zweiten elektrischen Kontakt (13),
Ausführen einer Relativbewegung zwischen der ersten Kontaktfläche (12) und dem ferroelektrischen Medium (2), so dass die erste Kontaktfläche (12) den ersten Seitenflächenabschnitt (8) überstreicht,
Erfassen eines Maßes für einen zwischen dem ersten elektrischen Kontakt (11) und dem zweiten elektrischen Kontakt (13) durch das ferroelektrische Medium (2) fließenden Strom und
Regeln der elektrischen Spannung, so dass eine Abweichung des Stroms von einem Soll-Polungsstrom minimal ist,
**dadurch gekennzeichnet, dass**
der zweite elektrische Kontakt (13) ein Ionenleiter ist.

**2.** Verfahren nach dem vorhergehenden Anspruch, wobei das Verfahren weiterhin den Schritt umfasst Aufheizen des ferroelektrischen Mediums (2) während des Ausführens der Relativbewegung zwischen der ersten Kontaktfläche (12) und dem ferroelektrischen Medium (2), vorzugsweise Aufheizen des ferroelektrischen Mediums (2) auf eine Temperatur von 50 Grad Celsius oder mehr.

**3.** Verfahren nach einem der vorhergehenden Ansprüche, wobei das Ausführen der Relativbewegung zwischen der ersten Kontaktfläche (12) und dem ferroelektrischen Medium (2) derart erfolgt, dass der erste Seitenflächenabschnitt (8) trapezförmig ist.

**4.** Verfahren nach einem der vorhergehenden Ansprüche, wobei das Ausführen der Relativbewegung zwischen der ersten Kontaktfläche (12) und dem ferroelektrischen Medium (2) derart erfolgt, dass die erste Kontaktfläche (12) den ersten Seitenflächenabschnitt (8) entlang genau einer, vorzugsweise linearen, Linie (21) überstreicht.

5. Verfahren nach dem vorhergehenden Anspruch, wobei der Soll-Polungsstrom entlang der Linie (21) variiert wird.

6. Verfahren nach einem der vorhergehenden Ansprüche, wobei der zweite elektrische Kontakt (13) einen festen oder flüssigen Elektrolyten umfasst.

7. Verfahren nach dem vorhergehenden Anspruch, wobei der zweite elektrische Kontakt (13) ein flüssiges Lösungsmittel umfasst.

8. Verfahren nach dem vorhergehenden Anspruch, wobei das Lösungsmittel Glycerin ist.

9. Verfahren nach einem der Ansprüche 6 bis 8, wobei der Elektrolyt Lithiumchlorid ist.

10. Verfahren nach einem der vorhergehenden Ansprüche, wobei das ferroelektrische Medium (2) ein Oxidkristall oder ein Fluoridkristall ist.

11. Verfahren nach einem der vorhergehenden Ansprüche, weiterhin mit dem Schritt Aufbringen eines Öls auf die erste Seitenfläche (6) um den ersten elektrischen Kontakt (11) herum.

12. System (1) zum Polen eines ferroelektrischen Mediums (2) mit einer ersten Seitenfläche (6) und einer der ersten Seitenfläche (6) gegenüberliegend angeordneten zweiten Seitenfläche (7), so dass das ferroelektrische Medium (2) ein erstes Volumensegment (3) und ein zweites Volumensegment (10) aufweist,
wobei das System aufweist

eine Aufnahme zum Aufnehmen des ferroelektrischen Mediums (2) in einem Betrieb des Systems (1),
einen ersten elektrischen Kontakt (11) mit einer ersten Kontaktfläche (12),
wobei der erste elektrische Kontakt (11) derart ausgestaltet und angeordnet ist, dass die erste Kontaktfläche (12) in dem Betrieb des Systems (1) auf einen ersten Seitenflächenabschnitt (8) der ersten Seitenfläche (6) des an dem Halter aufgenommenen ferroelektrischen Mediums (2) aufbringbar ist,
einen zweiten elektrischen Kontakt (13) mit einer zweiten Kontaktfläche (20),
wobei der zweite elektrische Kontakt () derart ausgestaltet und angeordnet ist, dass die zweite Kontaktfläche (20) in dem Betrieb des Systems (1) auf einen zweiten Seitenflächenabschnitt (9) der zweiten Seitenfläche (7) des in der Aufnahme aufgenommenen ferroelektrischen Mediums (2) aufbringbar ist,
eine elektrische Spannungsquelle,
wobei die Spannungsquelle derart mit dem ersten elektrischen Kontakt (11) und dem zweiten elektrischen Kontakt (13) verbunden ist, dass in dem Betrieb des Systems (1) eine elektrische Spannung zwischen den ersten und zweiten Kontaktflächen (12, 20) anlegbar ist,
eine Strommesseinrichtung (14),
wobei die Strommesseinrichtung (14) derart ausgestaltet und angeordnet ist, dass sie in dem Betrieb des Systems (1) ein Maß für einen zwischen dem ersten elektrischen Kontakt (11) und dem zweiten elektrischen Kontakt (13) durch das ferroelektrische Medium (2) fließenden Strom erfasst,
einen Aktor,
wobei der Aktor derart ausgestaltet und angeordnet ist, dass der Aktor in dem Betrieb des Systems (1) eine Relativbewegung zwischen der ersten Kontaktfläche (11) und dem Halter bewirkt, und
eine Steuer- und Regeleinrichtung (16),

wobei die Steuer- und Regeleinrichtung (16) derart wirksam mit dem Aktor verbunden ist, dass in dem Betrieb des Systems (1) der Aktor ein Aktorsteuersignal von der Steuer- und Regeleinrichtung (16) empfängt, wobei die Steuer- und Regeleinrichtung (16) derart wirksam mit der Strommesseinrichtung (14) verbunden ist, dass die Steuer- und Regeleinrichtung (16) in dem Betrieb des Systems (1) ein Maß für den Polungsstrom von der Strommesseinrichtung (14) empfängt,
wobei die Steuer- und Regeleinrichtung (16) derart wirksam mit der Spannungsquelle (17) verbunden ist, dass in dem Betrieb des Systems (1) die Spannungsquelle (17) ein Spannungssteuersignal von der Steuer- und Regeleinrichtung (16) empfängt, und
wobei die Steuer- und Regeleinrichtung (16) derart eingerichtet ist, dass

die Steuer- und Regeleinrichtung (16) in dem Betrieb des Systems (1) das Aktorsteuersignal derart erzeugt und ausgibt, dass die erste Kontaktfläche (12) den ersten Seitenflächenabschnitt (8) des an dem Halter aufgenommenen ferroelektrischen Mediums (2) überstreicht, und
die Steuer- und Regeleinrichtung (16) in dem Betrieb des Systems (1) das Spannungssteuersignal derart erzeugt und ausgibt, dass eine Abweichung des Werts für den Strom von einem Wert für einen Soll-Polungsstrom minimal ist,

**dadurch gekennzeichnet, dass**
der zweite elektrische Kontakt (13) ein Ionenleiter ist.

13. System nach dem vorhergehenden Anspruch, wobei der erste elektrische Kontakt (11) eine Nadel ist und die erste Kontaktfläche (12) eine Spitze der Nadel ist.

Fig. 1

Fig. 2

Fig. 3

Europäisches
Patentamt

European
Patent Office

Office européen
des brevets

# EUROPÄISCHER RECHERCHENBERICHT

Nummer der Anmeldung

EP 23 21 1248

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2008/231942 A1 (HUANG LEE LISHENG [US] ET AL) 25. September 2008 (2008-09-25) * Abbildungen 1, 2, 5, 6, 8 * * Absätze [0002], [0050], [0067], [0076], [0083] – [0084], [0097] * ----- | 1,5-8, 11-13 | INV. G02F1/355 |
| X | US 2021/238767 A1 (ZHANG GUO-QUAN [CN] ET AL) 5. August 2021 (2021-08-05) * Abbildungen 2-4, 9 * * Absätze [0038] – [0043], [0063], [0065] * ----- | 1-4,6,7, 9,10,13 | |
| X | EP 2 553 692 B1 (UNIV DRESDEN TECH [DE]) 16. März 2016 (2016-03-16) * Abbildungen 1-3, 6 * * Absätze [0040], [0063] – [0064] * * Ansprüche 10, 18 * ----- | 1,12 | |

RECHERCHIERTE SACHGEBIETE (IPC)

G02F

Der vorliegende Recherchenbericht wurde für alle Patentansprüche erstellt

| Recherchenort | Abschlußdatum der Recherche | Prüfer |
|---|---|---|
| Den Haag | 9. April 2024 | Topak, Eray |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
...........................................................................
& : Mitglied der gleichen Patentfamilie, übereinstimmendes
    Dokument

EPO FORM 1503 03.82 (P04C03)

# EP 4 560 395 A1

**ANHANG ZUM EUROPÄISCHEN RECHERCHENBERICHT
ÜBER DIE EUROPÄISCHE PATENTANMELDUNG NR.**   EP 23 21 1248

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-04-2024

| Im Recherchenbericht angeführtes Patentdokument | Datum der Veröffentlichung | Mitglied(er) der Patentfamilie | Datum der Veröffentlichung |
|---|---|---|---|
| US 2008231942 A1 | 25-09-2008 | US 2008231942 A1 | 25-09-2008 |
| | | US 2009028207 A1 | 29-01-2009 |
| | | WO 2008030248 A2 | 13-03-2008 |
| US 2021238767 A1 | 05-08-2021 | CN 110670134 A | 10-01-2020 |
| | | EP 4033013 A1 | 27-07-2022 |
| | | US 2021238767 A1 | 05-08-2021 |
| | | WO 2021051844 A1 | 25-03-2021 |
| EP 2553692 B1 | 16-03-2016 | DE 102010014390 A1 | 06-10-2011 |
| | | EP 2553692 A1 | 06-02-2013 |
| | | WO 2011120495 A1 | 06-10-2011 |

EPO FORM P0461

Für nähere Einzelheiten zu diesem Anhang : siehe Amtsblatt des Europäischen Patentamts, Nr.12/82

15